# EUROPÄISCHE PATENTANMELDUNG

(11) **EP 1 278 139 A1**
(43) Veröffentlichungstag der Anmeldung: **22.01.2003**
(21) Anmeldenummer: 01117488.5
(22) Anmeldetag: 19.07.2001
(51) Int. Cl.: G06F 17/60

(54) **Kundenorientiertes Transaktions- und Zugangssystem für Einrichtungen und Veranstaltungen**

(71) Anmelder: Worldwideticket AG, 64546 Mörfelden (DE)
(72) Erfinder: Hoffmann, Matthias, 64235 Darmstadt (DE)
(74) Vertreter: Zipse + Habersack

(57) **Zusammenfassung**

Die Erfindung betrifft ein kundenorientiertes Transaktions- und Zugangssystem für Einrichtungen und Veranstaltungen, umfassend:
- einen Host (10) eines Systembetreibers, auf den Systemnutzer über ein primäres Zugangssystem, insbesondere Telekommunikationsnetz und/oder Internet (12) mittels herkömmlicher Kommunikationsendgeräte (14), wie z.B. Terminals, Telefone, PCs zugreifen können,
- auf welchem Host (10) Transaktionssysteme von Vertragspartnern implementiert sind oder welcher Host mit Transaktionssystemen von Vertragspartnern verbindbar ist, wobei
- im Host ein Aktualisierungssystem implementiert ist, das den Verknüpfungsalgorithmus unter Berücksichtigung der getätigten Transaktion aktualisiert.

## Beschreibung

Bislang ist es üblich, Karten für Veranstaltungen aller Art oder für Einrichtungen wie Museen, Galerien, Messen oder Freizeitparks entweder im Vorverkauf oder an der Kasse des Veranstaltungsortes zu lösen. Dieses herkömmliche System ist mit einer Menge an Unannehmlichkeiten verbunden. Zum einen muss man oft in den Schlangen an den Vorverkaufsstellen ausharren, um schließlich am Schalter zu erfahren, dass für die gewünschte Veranstaltung der gewünschte Sitzplatz nicht mehr erhältlich ist. Zum anderen ist an den Abendkassen oft überhaupt keine Karte in den gewünschten Kategorien mehr erhältlich. Dies führt schließlich dazu, dass die potentiellen Kunden von dem Besuch von Veranstaltungen, Konzerten oder sonstigen kulturellen oder sportlichen Aufführungen Abstand nehmen, obwohl sie prinzipiell dafür Interesse hätten.

Es ist daher Aufgabe der Erfindung, ein System zu schaffen, mit welchem sich für Einrichtungen und Veranstaltungen in benutzerfreundlicher Weise Reservierungen und Buchungen vornehmen lassen, welches System somit geeignet ist, das Interesse der Allgemeinheit an dem Besuch von Veranstaltungen und Einrichtungen aller Art zu fördern.

Diese Aufgabe wird erfindungsgemäß durch ein System gemäß Anspruch 1 gelöst. Vorteilhafte Weiterentwicklungen der Erfindung sind Gegenstand der Unteransprüche.

Das Transaktionssystem der Erfindung basiert auf wenigstens einem Host oder Server, der von einem Systembetreiber in einem primären Zugangssystem, nachfolgend kurz: "Netz", bereitgestellt wird. Ein derartiges Netz ist beispielsweise ein Telekommunikationsnetz und/oder das Internet, eventuell noch weitere kabelbasierte oder kabellose Netze, wie satelittengestützte Netze. Der Host oder Server besteht vorzugsweise aus einem oder mehreren Rechnern, die speziell für en externen Datenaustausch mit dem Netz bzw. mehreren Netzen konfiguriert ist. Der Host kann auch mit mehreren primären Zugangssystemen verbunden sein.

Über diesen Host können Systembenutzer auf Transaktionssysteme von Vertragspartnern zugreifen, wie z.B. Veranstalter von kulturellen oder sportlichen Events, Museen, Galerien, Freizeitparks etc..

Bevor ein Systembenutzer auf das Angebot der Vertragspartner zugreifen kann, muss er in dem System mit seinen persönlichen Daten erfasst sein. Mit dieser Erfassung oder auch Login erhält der Systembenutzer eine Identifikationsnummer, die ihm, beispielsweise auch in Form einer Chipkarte, für alle Transaktionen in dem System zugewiesen wird. Mit der Identifikationsnummer bzw. mit der Chipkarte erhält der Systembenutzer Zugang zu den Transaktionssystemen der Vertragspartner, insbesondere mittels des Hosts des Systembetreibers.

Greift ein Systembenutzer auf den Host des Systembetreibers zu, so erhält er, vorzugsweise nach Einloggen in das System unter Angabe der Identifikationsnummer, ein vielfältiges Angebot der Vertragspartner, die mit dem Systembetreiber die Durchführung von Transaktionen über das System vertraglich geregelt haben.

Vorzugsweise im Host ist ein Verknüpfungsalgorithmus vorgesehen, der beim Zugang die Identifikationsnummer des Systembenutzers mit bereits unter dieser Identifikationsnummer getätigten Transaktionen korreliert und daraufhin eine entsprechend angepasste Angebotsseite an den Endbenutzer übermittelt. Auf diese Weise kann die anfangs allgemein gehaltene Angebotsseite gezielt auf die Interessen des Systembenutzers adaptiert werden, z.B gezielt auf Pop- oder Klassik-Konzerte. Den Zugang auf die Angebotsseite erhält der Systembenutzer vorzugsweise nur nach Eingabe seiner Identifikationsdaten und Verifizierung dieser Daten durch eine Vergleichslogik im Host. Alternativ kann jedoch das System auch so ausgebildet sein, dass die Identifikationsdaten erst zu einem späteren Zeitpunkt abgefragt und verifiziert werden, beispielsweise wenn der Systembenutzer Interesse für eine bestimmte Transaktion hat und die Transaktionsoptionen, z. B. die Sitzplatzbelegung, angezeigt haben will, oder wenn er eine Transaktion abschließen will, zum Beispiel ein Ticket für eine Veranstaltung erwerben möchte.

Zeigt der Systembenutzer Interesse für eine gewisse Veranstaltung oder Einrichtung, so greift er auf die entsprechend in der Angebotsseite enthaltenen Informationen zu, in welchem Fall ihm vom Transaktionssystem des entsprechenden Vertragspartners eine Transaktionsoptionsseite übermittelt wird, in welcher die relevanten Daten für die Transaktion angezeigt werden, z. B. ob für eine bestimmte Veranstaltung noch Karten erhältlich sind bzw. in welcher Kategorie die Karten erhältlich sind, zusammen mit den interessierenden Rahmendaten wie z. B. Sitzplatzanordnung und Sitzplatzbelegung bzw. Preise der unterschiedlichen Sitzplatzkategorien.

Hat sich der Systembenutzer unter Berücksichtigung der Transaktionsoptionsdaten für eine gewisse Transaktion entschieden, so wird er auf eine Transaktionsseite geführt, in welcher er die gewünschte Transaktion bestätigen muss. In diesem Fall wird ein Buchungsdatensatz erzeugt, der entweder in Form einer Rechnung an den Systembenutzer geschickt oder vorzugsweise direkt an ein als Vertragspartner agierendes Kreditinstitut geleitet wird, das im Fall einer erfolgreichen Buchung ein Bestätigungssignal an den Vertragspartner zurücksendet, in welchem Fall der Vertragspartner dem Systembenutzer die erfolgreiche Transaktion, z. B. Sitzplatzbuchung bestätigt. Der Betrag wird dem Systembenutzer dann durch das Kreditinstitut von seinem Konto abgebucht. Hierbei wird der Verknüpfungsalgorithmus insofern aktualisiert, als die erfolgreich durchgeführte neue Transaktion bei dem Erstellen eines Benutzerprofils berücksichtigt wird. Die Transaktionsoptionsdaten im Transaktionssystem des Vertragspartners werden insofern aktualisiert, als die durch die neue Transaktion gebuchten Plätze nun als nicht mehr verfügbar gekennzeichnet sind.

Die in der Transaktion gekauften Eintrittskarten können nun entweder in Papierform per Post geliefert werden oder die Zugangsberechtigung als Ziel der Transaktion kann papierlos erfolgen. Hierzu ist vorzugsweise beim Vertragspartner am Veranstaltungsort ein Sperrensystem oder Zugangssystem vorgesehen, das z. B. nur mit der Eingabe der Identifikationsdaten, Transaktionsdaten oder Buchungsdaten der durchgeführten Transaktion betätigbar ist. Vorstellbar wäre hier das Einführen einer die Identifikationsdaten enthaltenden Datenträgerkarte, z. B. Chipkarte oder die Abgabe von entsprechenden Identifikationssignalen durch Endgeräte wie z. B. Handys. Beim Veranstaltungsort können dann vorzugsweise auch Peripheriegeräte wie Drucker vorgesehen sein, die im Falle der Betätigung einer Sperre dem Systembenutzer die Nummer des Sitzplatzes oder eine Wegbeschreibung zum Sitzplatz ausdrucken.

Dieses System ermöglicht es dem Vertragspartner auch festzustellen, zu welchem Grad die Veranstaltung bereits mit Bezug auf die vorher gekauften bzw. reservierten Tickets besucht ist.

Für den Benutzer besteht ein großer Vorteil darin, dass er sich nicht mit großem Aufwand um den Kauf der Karten bemühen muss, dass er das Eintrittsticket nicht mehr verlieren kann, und dass selbst im Falle des Verlustes der Identifikationsnummer bzw.

Chipkarte aufgrund der Personalisierung der Buchung für den Veranstalter klar erkennbar ist, ob der Besucher derjenige ist, der in der Tat eine Zugangsberechtigung erworben hat.

Die Tatsache, dass jede Sitzplatzbuchung nun mit Personendaten verknüpft ist, kann im Rahmen von Personenschutz, Objektschutz und allgemeiner Sicherheit auch dazu verwendet werden, den Besuch einer Veranstaltung durch gewaltbereite Risikogruppen, wie z.B. Hooligans, zu erschweren bzw. zu verhindern.

Weiterhin ist für den Veranstalter bzw. Vertragspartner die statistische Aufbereitung seiner Veranstaltungen einfacher. Er sieht, welche Veranstaltungen zu welchem Prozentsatz durch welche Art von Endkunden ausgelastet sind und kann dies bei seiner Werbung und Preisgestaltung gezielt berücksichtigen. Ferner kann er aufgrund der personenbezogenen Identifikationsdaten im Host ein Kundenprofil seiner Besucher erstellen, welches ihm ermöglicht gezielter für seine Veranstaltungen zu werben und Zielgruppen direkt anzusprechen (Direktmarketing). Ein weiterer wesentlicher Vorteil des Systems besteht auch in den Peripherieleistungen wie z. B. Transferservice, Restaurantbuchung etc., die in dem gleichen System vorgenommen werden können. Dies umfasst auch die Buchung von Rücktrittsversicherungen. Es können somit in dem System eine Folge von Dienstleistungen gebucht und somit Verknüpfungen zwischen Dienstleistungen hergestellt werden, die dem Kunden einerseits ein breiteres und umfassenderes Angebot sicherstellen und andererseits den Vertragspartnern neue Marketingmöglichkeiten erschließen.

Als Träger für die Identifikationsdaten können, wie bereits angedeutet, Magnetkarten oder Chipkarten verwendet werden. Hierdurch ist die Nutzung von vielfältigen Dienstleistungen und bargeldloses Einkaufen als auch das Eindecken mit Verpflegung möglich, z.B duch Aufladen von Geldsummen auf die Chipkarte. Dies kann sogar im Internet über e-commerce abgewickelt werden.

Es sind jedoch auch andere Geräte verwendbar, die in der Lage sind, Daten zu speichern, wie z. B. in Geräten von Telekommunikationseinrichtungen wie z. B. Handys, aktive Chips, die bereits in Verbindung mit Zugangssystemen von Skiliften verwendet werden, wobei auf dem Chip eine Identifizierungsnummer abgelegt ist und der Chip am Zugangssystem zur Abgabe der Identifizierung aktiviert wird. Der Chip könnte in einem Display eine Anzeige enthalten, die beispielsweise die Sitzplatznummer bzw. den Sitzplatzblock anzeigt, oder der in Verbindung mit einem Leitsystem zur Führung des Benutzers zu seinem Sitz- oder Stehplatz verwendet werden kann.

Durch Verwendung der UMTS-Technik können mobile Endgeräte zum einen die Eintrittskarte ersetzen, und mittels des Telefondisplays gleichzeitig in Verbindung mit einem Leitsystem zum Auffinden des Sitzplatzes verwendet werden. Das SMS-System kann hierbei auch zur Anzeige des Sitzplatzes oder andere Leitinformationen verwendet werden.

Als Vertragspartner für ein derartiges Transaktionssystem eignen sich insbesondere Veranstalter jeglicher Art, wie die Veranstalter von kulturellen und sportlichen Ereignissen, Konzertveranstalter, Kinos, Ausstellungen, Museen, Galerien, Messen und Freizeitparks. Darüber hinaus können auch Dienstleistungsanbieter mit verknüpften Dienstleistungen als Vertragspartner einbezogen werden, wie z. B. Versicherungen, Fuhr- bzw. Taxiunternehmen, Hotels, Restaurants, Geschäfte, wie z.B. Blumen- oder Schmuckgeschäfte, Banken und andere Kreditinstitute.

Die Erfindung wird nachfolgend beispielsweise anhand der schematischen Zeichnungen beschrieben. In dieser zeigen:
- Figur 1: ein erfindungsgemäßes Transaktionssystem mit einem Zugriff von einem Endgerät über einen Host auf verschiedenen Transaktionssysteme von Vertragspartnern, und
- Figur 2: ein Transaktionssystem eines Vertragspartners mit einer Verbindung zu einer zentralen Steuerung am Veranstaltungsort mit eingeschlossenen Peripheriegeräten.

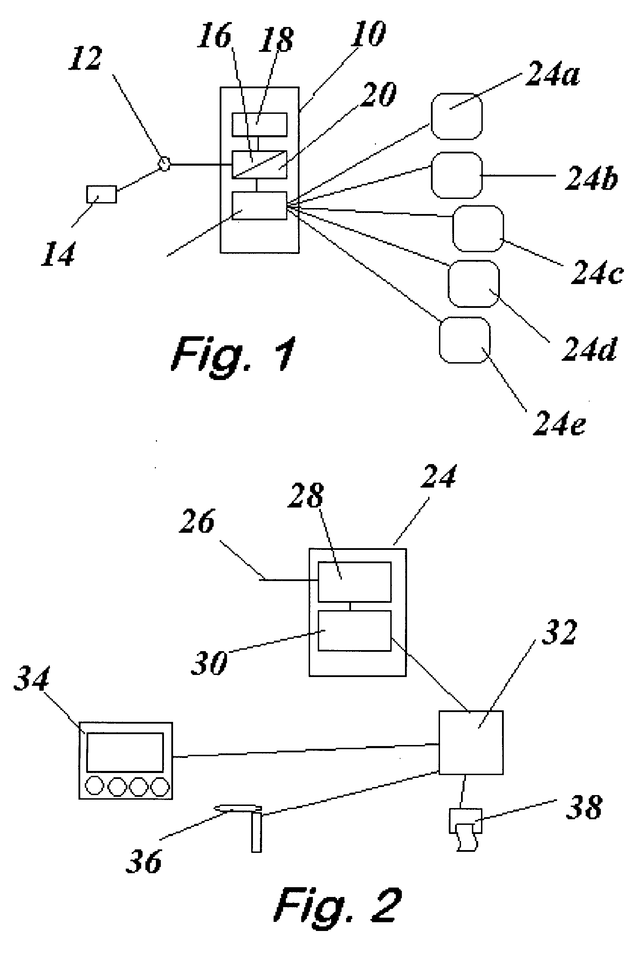

Figur 1 zeigt einen Host 10 eines Systembetreibers der durch eine handelsübliche Serverstation gebildet sein kann. Der Host 10 ist mit einem Netzwerk, im vorliegenden Beispiel dem Internet 12 verbunden, das mit den Endgeräten 14 von Systembenutzern, den Endkunden, verbunden ist. Der Host 10 enthält an seinem eine Vergleichslogik 16, die eine vom Endgerät 14 erhaltene Identifikationssequenz auf eine Übereinstimmung mit im Speicher 18 gespeicherten personenbezogenen Identifikationsdaten überprüft. Wenn die Identifikationssequenz verifiziert wird, werden die Daten an eine Verknüpfungslogik 20 weitergegeben, die unter Berücksichtigung der bisherigen Transaktionshistorie des mit der Identifikationsnummer verknüpften Kunden eine speziell zugeschnittene Angebotsseite 22 zusammenstellt, die auf den Kunden zugeschnittene Angebote aus den Transaktionssystemen 24a-e verschiedener Transaktionspartner enthält.

Wünscht der Systembenutzer bzw. -kunde nähere Informationen zu einem Angebot, so wird er über ein sekundäres Zugriffsystem 26, z. B. Internet, mit dem Transaktionssystem des gewünschten Vertragspartners 24a-e verbunden. Das Transaktionssystem 24 enthält einen Speicherbereich 28 für Buchungsoptionsdaten, die auf eine Buchungsanfrage eines Systembenutzers an dessen Endgerät 14 ausgegeben werden. Derartige Buchungsoptionen können z. B. die Sitzplätze in einer Veranstaltung bzw. die Preiskategorien unterschiedlicher Sitz- oder Stehflächen in einer Veranstaltung sein. Nachdem der Endkunde eine definierte Buchungsoption ausgewählt hat, wird in ein Transaktionsfenster 30 gewechselt, das den eigentlichen Transaktionsvorgang abschließt. In diesem Transaktionsfenster macht der Endkunde eine verbindliche Buchung, die von dem System in dem Transaktionsfenster 30 bestätigt wird. Vorzugsweise befindet sich unter den Vertragspartnern ein Kreditinstitut, das die bei der Transaktion erzeugten Buchungsdatensätze übernimmt und gleich von dem Konto des Endkunden abbucht. Vorzugsweise kann in diesem Zusammenhang das Kreditinstitut ein Bestätigungsdatensatz an den Endkunden und den Transaktionspartner weiterleiten, der nach Erhalt der Buchungsbestätigung seitens des Kreditinstituts wiederum die Platzbuchung beim Endkunden auf dessen Endgerät 14 bestätigt. Im Rahmen dieser Transaktion wird ein Transaktionsdatensatz erzeugt, der einem Datenbereich für personenbezogene Daten 18 im Host 10 zugeleitet wird, so dass die Verknüpfungslogik 20 die gerade getätigte Transaktion bei der nächsten Transaktion im Rahmen der Transaktionshistorie des Endkunden zur Erstellung eines individualisierten Angebots berücksichtigen kann. Weiterhin wird entsprechend der durchgeführten Transaktion der Speicherbereich 28 für die Buchungsoptionsdaten verändert, insofern als die nun gebuchten Plätze nicht mehr zur Verfügung stehen. Des weiteren wird der Transaktionsdatensatz, vorzugsweise nach Abschluss der zulässigen Buchungsperiode an eine am Veranstaltungsort angeordnete zentrale Steuerung 32 übermittelt, die Peripheriegeräte wie z. B. einen Infostand 34, eine Zugangssperre 36 und mit einem Ticket bzw. Sitzplatzdrucker 38 verbunden ist. Ferner kann in dem host ein Rabattsystem abgelegt sein, dass Rabattpunkte in Folge getätigter Transaktionen vergibt, die dann bei den Vertragspartnern eingelöst werden können, oder bei der nächsten Transaktion als Preisnachlass berücksichtigt werden können.

Das System hat den Vorteil, dass der Endkunde ohne Ausstellung eines Papiertickets zum Veranstaltungsort gehen kann und dort allein durch die Abgabe seiner Identifikationsdaten, z. B. auf einer Chipkarte Zugang zum Veranstaltungsort erhält, wo er dann ggf. über den Infostand oder den Drucker, aber auch über Display auf den Chips oder im Display eines UMTS-Handys seine Sitzplatznummer ausdrucken lassen kann. Statt einer Chipkarte lässt sich auch jedes mobile Kommunikationsendgerät wie z. B. ein Handy zur Passierung der identifikationsgesteuerten Sperren verwenden, in welchem Fall auf dem Handydisplay die Sitznummer angezeigt werden kann, bzw. das Handy für eine Führung des Kunden zu seinem Sitzplatz verwendet werden kann. In diesem Fall können auch Endgeräte mit GPS-Systemen verwendet werden, die eine exakte Positionierung des Kunden und die Abgabe positionsbezogener Informationen an den Kunden am Veranstaltungsort erlauben.

## Patentansprüche

1. Kundenorientiertes Transaktions- und Zugangssystem für Einrichtungen und Veranstaltungen, umfassend:
- einen Host (10) eines Systembetreibers, auf den Systemnutzer über ein primäres Zugangssystem, insbesondere Telekommunikationsnetz und/oder Internet (12) mittels herkömmlicher Kommunikationsendgeräte (14), wie z.B. Terminals, Telefone, PCs zugreifen können,
- auf welchem Host (10) Transaktionssysteme von Vertragspartnern implementiert sind oder welcher Host mit Transaktionssystemen von Vertragspartnern verbindbar ist,
wobei
- im Host (10) Speicherbereiche für Identifikations- und Angebotsdaten vorgesehen und ein Verknüpfungsalgorithmus zwischen den Identifikationsdaten und den Angebotsdaten implementiert ist, der aus dem bisherigen Transaktionsverhalten eines Systemnutzers abgeleitet ist,
- der Host eine Vergleichslogik (16) aufweist, die eine von einem Endgerät erhaltene Identifikationssequenz mit gespeicherten Identifikationsdaten (18) vergleicht und im Falle eines positiven Vergleichsergebnisses die Angebotsdaten für das Endgerät unter Verwendung des Verknüpfungsalgorithmus (20) in einer Angebotsebene bereitstellt,
- im Transaktionssystem (24a-e) Speicherbereiche (28) für Transaktionsoptionsdaten - z.B. eine Sitzplatzbelegung - vorgesehen sind, die im Endgerät auf eine Transaktionsanfrage hin in einer Transaktionsoptionsebene (30) zur Anzeige gebracht werden,
- im Rahmen einer erfolgreich durchgeführten Transaktion unter Verwendung der den Identifikationsdaten zugeordneten Personendaten wenigstens ein Transaktions- und Buchungsdatensatz erzeugt wird,
- im Transaktionssystem ein Aktualisierungssystem implementiert ist, das die Transaktionsoptionsdaten unter Berücksichtigung der abgeschlossenen Transaktion aktualisiert,
- im Host ein Aktualisierungssystem implementiert ist, das den Verknüpfungsalgorithmus unter Berücksichtigung der getätigten Transaktion aktualisiert.

2. System nach Anspruch 1,
bei dem das Transaktionssystem (24) wenigstens eines Vertragspartners ein Sperren/Zugangssystem (36) aufweist, das mittels Identifikationskarten, wie z.B. Chipkarten und/oder mittels Identifikationssignalen von Endgeräten (14) betätigbar ist.

3. System nach Anspruch 1 oder 2,
bei dem das Transaktionssystem wenigstens eines Vertragspartners ein Ausgabesystem für Tickets (38) aufweist, das mittels Identifikationskarten, wie z.B. Chipkarten und/oder mittels Identifikationssignalen von Endgeräten (14) betätigbar ist.

4. System nach einem der vorhergehenden Ansprüche,
bei dem das Transaktionssystem wenigstens eines Vertragspartners ein Informationssystem (34) , z.B. Display aufweist, das mittels Identifikationskarten, wie z.B. Chipkarten und/oder mittels Identifikationssignalen von Endgeräten (14) betätigbar ist.

5. System nach einem der vorhergehenden Ansprüche,
bei dem das Transaktionssystem (24) wenigstens eines Vertragspartners eine Steuerung (32) aufweist, welche Zugangs-, Informations- oder Peripheriesysteme (34,36,38) am Veranstaltungsort steuert, wobei die Steuerung (32) mit dem Transaktionssystem (24) des Vertragspartners zur Übermittlung der Transaktionsdatensätze verbindbar oder verbunden ist.

6. System nach einem der vorhergehenden Ansprüche, bei dem wenigstens ein Vertragspartner ein Kreditinstitut ist, dem der Buchungsdatensatz des Transaktionspartners (=Vertragspartner mit dem eine Transaktion abgeschlossen wird) direkt übermittelt wird.

7. System nach Anspruch 6, bei dem der Transaktionspartner die Transaktion erfolgreich abschließt, nachdem es eine positive Bestätigung der Buchung vom Kreditinstitut erhalten hat.

8. System nach einem der vorhergehenden Ansprüche, bei dem ein Stornierungssystem implementiert ist, welches nach Eingabe von Stornierungsdaten einen Rückbuchungsdatensatz generiert und das Aktualisierungssystem des Transaktionssystems zur Aktualisierung der Transaktionsoptionsdaten veranlasst.

9. System nach einem der vorhergehenden Ansprüche, bei dem ein Auktionssystem vorgesehen ist, welches eine benutzergesteuerte Angebotsebene enthält, in die ein Transaktionsdatensatz einer Transaktion übernehmbar ist, welcher Transaktionsdatensatz im Falle einer erfolgreichen Versteigerung verändert und an den Transaktionspartner übermittelt wird, und ein Buchungsdatensatz zwischen dem Versteigerer und dem Bieter erzeugt wird.

10. System nach einem der vorhergehenden Ansprüche, bei dem nach erfolgreicher Transaktion dem Systembenutzer ein Bestätigungsdatensatz übermittelt wird.

11. System nach einem der vorhergehenden Ansprüche, bei dem im Host eine benutzerindividuelle Informationsebene implementiert ist, die zur Anzeige der sich die den Identifikationsdaten des Benutzers zugeordneten Transaktionsdatensätze konzipiert ist.
